# EUROPEAN PATENT APPLICATION

(11) **EP 4 750 059 A1**
(43) Date of publication of application: **27.05.2026**
(21) Application number: 24842282.6
(22) Date of filing: 12.07.2024
(51) Int. Cl.: H04N 19/136

(54) **GAIN MAP ENCODING METHOD AND APPARATUS, GAIN MAP DECODING METHOD AND APPARATUS, DEVICE, AND MEDIUM**

(30) Priority: 18.07.2023 CN 202310884272
(71) Applicant: Vivo Mobile Communication Co., Ltd., Dongguan, Guangdong 523863 (CN)
(72) Inventor: ZHAO, Zhijie, Dongguan, Guangdong 523863 (CN); ZHOU, Liao, Dongguan, Guangdong 523863 (CN)
(74) Representative: Conti, Marco
(86) International application number: PCT/CN2024/105087
(87) International publication number: WO 2025/016289

(57) **Abstract**

This application relates to the field of communication technologies, and discloses a gain map encoding method and apparatus, a gain map decoding method and apparatus, a device, and a medium. The method of this application includes: determining a first picture region and a second picture region in a gain map, where a brightness of a pixel point in the first picture region is greater than a first threshold, and a brightness of a pixel point in the second picture region is less than or equal to the first threshold (S301); determining an encoding strategy of the gain map based on the first picture region and the second picture region (S302); and encoding the gain map based on the encoding strategy, to obtain encoded information of the gain map (S303).

## Description

### CROSS-REFERENCE TO RELATED APPLICATIONS

This application claims priority to Chinese Patent Application No. 202310884272.1, filed with the China National Intellectual Property Administration on July 18, 2023 and entitled "GAIN MAP ENCODING METHOD AND APPARATUS, GAIN MAP DECODING METHOD AND APPARATUS, DEVICE, AND MEDIUM", which is incorporated herein by reference in its entirety.

### TECHNICAL FIELD

This application relates to the field of communication technologies, and in particular, to a gain map encoding method and apparatus, a gain map decoding method and apparatus, a device, and a medium.

### BACKGROUND

With the progress of picture collection and display technologies, high-dynamic range imaging and display can be completed on an electronic device (for example, a smartphone or a tablet). Although increasing devices support display of a high-dynamic range static picture, a large number of electronic devices supporting only a standard dynamic range (SDR) still exist. Considering that a photographed high-dynamic range picture can present a good display effect on both a high-dynamic range (HDR) display device and an SDR display device, a collection, storage, and display solution of the HDR based on a gain map (gain map) is a commonly used method in the industry.

However, as additional information in addition to an SDR picture and an HDR picture, the gain map usually increases a storage space requirement.

### SUMMARY

An objective of embodiments of this application is to provide a gain map encoding method and apparatus, a device, and a medium, to resolve an existing problem that a gain map increases a storage space requirement.

According to a first aspect, an embodiment of this application provides a gain map encoding method, including:
determining a first picture region and a second picture region in a gain map, where a brightness of a pixel point in the first picture region is greater than a first threshold, and a brightness of a pixel point in the second picture region is less than or equal to the first threshold;
determining an encoding strategy of the gain map based on the first picture region and the second picture region; and
encoding the gain map based on the encoding strategy, to obtain encoded information of the gain map.

According to a second aspect, an embodiment of this application provides a gain map decoding method, including:
obtaining encoded information of a gain map; and
decoding the encoded information to obtain the gain map, where
a first picture region and a second picture region of the gain map are encoded through different encoding strategies, a brightness of a pixel point in the first picture region is greater than a first threshold, and a brightness of a pixel point in the second picture region is less than or equal to the first threshold.

According to a third aspect, an embodiment of this application provides a gain map encoding apparatus, including:
a first processing module, configured to determine a first picture region and a second picture region in a gain map, where a brightness of a pixel point in the first picture region is greater than a first threshold, and a brightness of a pixel point in the second picture region is less than or equal to the first threshold;
a second processing module, configured to determine an encoding strategy of the gain map based on the first picture region and the second picture region; and
an encoding module, configured to encode the gain map based on the encoding strategy, to obtain encoded information of the gain map.

According to a fourth aspect, an embodiment of this application provides a gain map decoding apparatus, including:
an obtaining module, configured to obtain encoded information of a gain map; and
a decoding module, configured to decode the encoded information, to obtain the gain map, where
a first picture region and a second picture region of the gain map are encoded through different encoding strategies, a brightness of a pixel point in the first picture region is greater than a first threshold, and a brightness of a pixel point in the second picture region is less than or equal to the first threshold.

According to a fifth aspect, an embodiment of this application provides an electronic device. The electronic device includes a processor and a memory. The memory stores a program or an instruction executable on the processor. The program or the instruction, when executed by the processor, implements the steps of the method in the first aspect or the second aspect.

According to a sixth aspect, an embodiment of this application provides a readable storage medium. The readable storage medium stores a program or an instruction. The program or the instruction, when executed by a processor, implements the steps of the method in the first aspect or the second aspect.

According to a seventh aspect, an embodiment of this application provides a chip. The chip includes a processor and a communication interface. The communication interface is coupled to the processor. The processor is configured to run a program or an instruction to implement the method in the first aspect or the second aspect.

According to an eighth aspect, an embodiment of this application provides a computer program product. The program product is stored in a storage medium. The program product is executed by at least one processor to implement the method in the first aspect or the second aspect.

In this embodiment of this application, after the gain map is divided into the first picture region and the second picture region through the first threshold, the encoding strategy of the gain map can be determined based on the first picture region and the second picture region, and then the gain map is encoded based on the determined encoding strategy, to obtain the encoded information of the gain map. In this way, for picture regions having different brightnesses, an applicable encoding strategy is adopted for encoding, which reduces a data volume and saves a storage space compared with directly storing the gain map. Because the encoding strategy corresponds to different picture regions having different brightnesses, compared with a single encoding strategy, low-quality encoding may be adopted for another picture region when it is ensured that a picture region including effective information obtains high-quality encoding and reconstruction, thereby reducing a requirement of the encoded information of the gain map for the storage space.

### BRIEF DESCRIPTION OF THE DRAWINGS

FIG. 1 is a schematic diagram I of application of a gain map;
FIG. 2 is a schematic diagram II of application of a gain map;
FIG. 3 is a schematic flowchart of an encoding method according to an embodiment of this application;
FIG. 4 is a schematic flowchart I of application of an encoding method according to an embodiment of this application;
FIG. 5 is a schematic flowchart II of application of an encoding method according to an embodiment of this application;
FIG. 6 is a schematic flowchart of a decoding method according to an embodiment of this application;
FIG. 7 is a schematic flowchart I of application of a decoding method according to an embodiment of this application;
FIG. 8 is a schematic flowchart II of application of a decoding method according to an embodiment of this application;
FIG. 9 is a schematic structural diagram I of modules of an apparatus according to an embodiment of this application;
FIG. 10 is a schematic structural diagram II of modules of an apparatus according to an embodiment of this application;
FIG. 11 is a schematic structural diagram of an electronic device according to an embodiment of this application; and
FIG. 12 is a schematic structural diagram of an electronic device according to another embodiment of this application.

### DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person skilled in the art based on embodiments of this application fall within the protection scope of this application.

Terms "first", "second", and the like in the specification and the claims of this application are used to distinguish between similar objects, rather than describe a specific sequence or order. It should be understood that data used in this way may be transposed where appropriate, so that embodiments of this application may be implemented in an order different from those illustrated or described herein. In addition, the objects distinguished by "first", "second", and the like are generally of the same class and do not limit a quantity of objects. For example, one or more first objects may be arranged. In addition, "and/or" used in the specification and the claims indicates at least one of connected objects. The character "/" generally indicates an "or" relationship between associated objects.

For ease of understanding, some contents in embodiments of this application are described below.

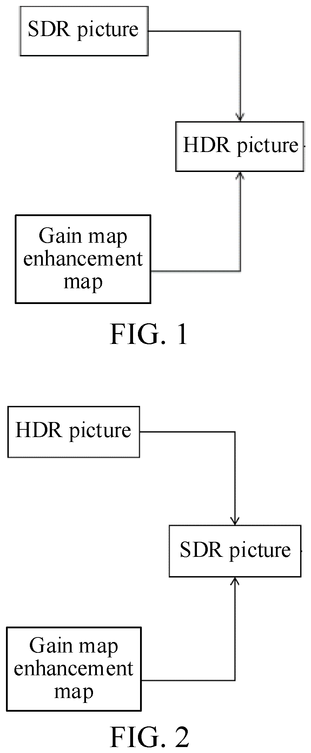

A gain map (also referred to as a gain map or an enhancement map) is usually generated when an HDR picture is collected. As a type of additional information, the gain map may be stored in a specific file format, for example, stored in a picture format or stored as additional information in a picture format, and then is encoded and transmitted. The gain map is decoded during display. The gain map is generated based on the HDR picture and a corresponding tone-mapped SDR picture thereof. The gain map may be used to generate a corresponding HDR picture through a SDR and the gain map, or may be used to generate a corresponding SDR picture through a HDR and the gain map, as shown in FIG. 1 and FIG. 2. In the two formats, the gain map needs to be stored.

In addition, based on the HDR solution of the gain map, a region that needs to be highlighted through the gain map in the HDR picture is limited. Main reasons are as follows. 1) If the bright region is excessively large, a bright region having a large area causes an uncomfortable feeling to human eyes. Therefore, when the gain map is generated, proper control of an area of the bright region needs to be considered. 2) If the bright region is excessively large, a visual experience advantage brought by the HDR is reduced. 3) In photographed natural content, a highlighted region is usually also limited.

A gain map encoding method and apparatus, a gain map decoding method and apparatus, a device, and a medium provided in embodiments of this application are described below in detail with reference to the accompany drawings through specific embodiments and application scenarios thereof.

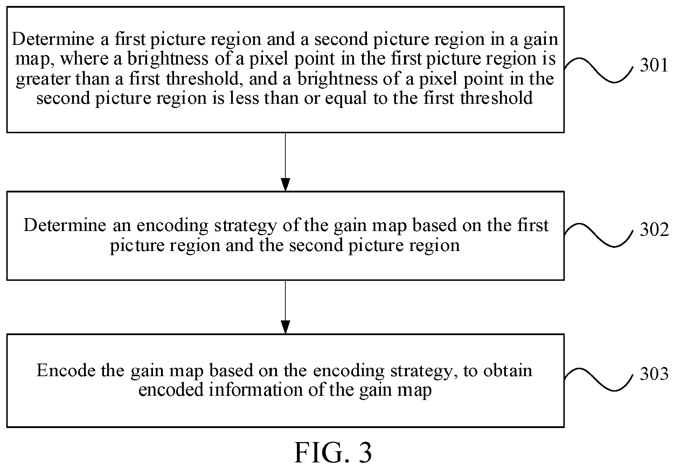

As shown in FIG. 3, a gain map encoding method in an embodiment of this application includes the following steps.

Step 301: Determine a first picture region and a second picture region in a gain map, where a brightness of a pixel point in the first picture region is greater than a first threshold, and a brightness of a pixel point in the second picture region is less than or equal to the first threshold.

The first threshold is a brightness threshold. In this step, for the gain map, the first picture region in which the brightness of the pixel point is greater than the first threshold and the second picture region in which the brightness of the pixel point is less than or equal to the first threshold are determined by comparing the brightness of the pixel point with the first threshold.

Step 302: Determine an encoding strategy of the gain map based on the first picture region and the second picture region.

Step 303: Encode the gain map based on the encoding strategy, to obtain encoded information of the gain map.

In this way, according to the foregoing steps 301-303, after the gain map is divided into the first picture region and the second picture region through the first threshold, the encoding strategy of the gain map can be determined based on the first picture region and the second picture region, and then the gain map is encoded based on the determined encoding strategy, to obtain the encoded information of the gain map. In this way, for picture regions having different brightnesses, an applicable encoding strategy is adopted for encoding, which reduces a data volume and saves a storage space compared with directly storing the gain map. Because the encoding strategy corresponds to different picture regions having different brightnesses, compared with a single encoding strategy, low-quality encoding may be adopted for another picture region when it is ensured that a picture region including effective information obtains high-quality encoding and reconstruction, thereby reducing a requirement of the encoded information of the gain map for the storage space.

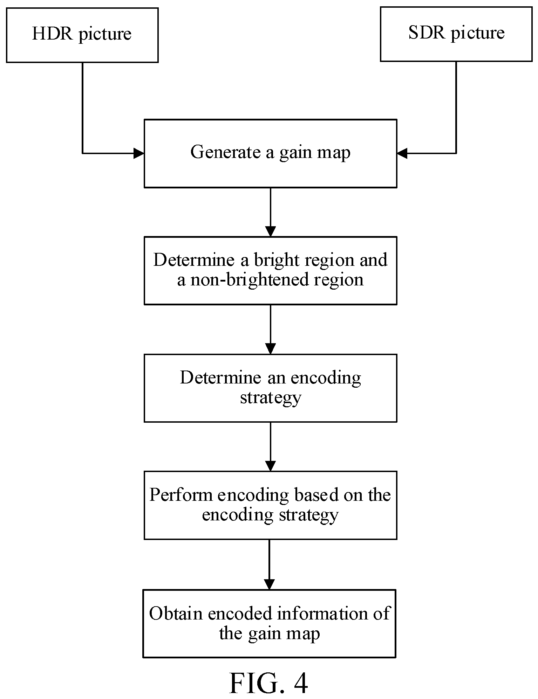

For example, as shown in FIG. 4, the gain map is generated by combining the HDR picture and the SDR picture. Then, a bright region of the gain map is identified. In other words, the first picture region (a bright region) in which a pixel value of the pixel point in the gain map is greater than the first threshold and the second picture region (a non-brightened region) in which a pixel value of the pixel point in the gain map is less than or equal to the first threshold are determined. Next, encoding strategies of different regions are respectively determined based on the first picture region and the second picture region. Next, the first picture region and the second picture region are encoded based on different encoding strategies, to obtain encoded information of the gain map.

Optionally, the determining a first picture region and a second picture region in a gain map includes:
determining a segmentation size based on a target tone mapping manner, where the target tone mapping manner is a tone mapping manner used when a standard dynamic range picture is generated from a high-dynamic range picture;
segmenting the gain map into a plurality of regions based on the segmentation size; and
determining the first picture region and the second picture region among the plurality of regions based on the first threshold.

In other words, sizes of the first picture region and the second picture region are related to a tone mapping (tone mapping) method used for generating the SDR picture through the HDR picture and a method for generating the gain map based on the HDR picture and the generated SDR picture. When an encoding device (for example, a user device) generates the SDR picture and the corresponding gain map through a tone mapping manner, namely, the target tone mapping manner, the segmentation size is related to the target tone mapping manner, the method for generating the gain map based on the HDR and the SDR, and the size of an encoding block supported by an adopted picture encoder. Generally, the segmentation size may be determined based on a size of a smallest encoding unit block supported by the picture encoder. For example, the segmentation size is greater than or equal to the size of the smallest encoding unit block. After the segmentation size is determined, the gain map is segmented based on the segmentation size, to obtain a plurality of regions. Further, the plurality of regions are divided into the first picture region and the second picture region with reference to the first threshold. For example, after 20 regions are obtained based on the segmentation size, 8 first picture regions and 12 second picture regions are further obtained based on the first threshold.

Certainly, the first picture region and the second picture region may also be identified and obtained based on an artificial intelligence learning method.

The first threshold is a preset brightness threshold. Setting of the first threshold may be adjusted based on different application scenarios and requirements. For example, in an application scenario, because a high requirement is imposed on quality of the HDR/SDR picture, a relatively large quantity of regions may be set as the first picture region (which may also be referred to as a bright region, and may also be referred to as an ROI-of-interest region), and a relatively small quantity of regions may be set as the second picture region (which may also be referred to as a non-brightened region, and may also be referred to as a non-ROI region). In another application scenario, because an added storage space for the gain map is limited, setting of the threshold may set the relatively small quantity of regions as the first picture region. Setting of the first threshold may further be related to content of the picture. For example, in a daytime scenery picture, illumination is sufficient, and a relatively large region may be selected as the first picture region by setting the threshold. In some night scenarios, regions with lamplight are limited, and a relatively small region may be selected as the first picture region by setting the threshold.

Optionally, in this embodiment, after the gain map is generated and before the gain map is encoded, some preprocessing operations may be performed on the gain map. For example, normalization processing is performed based on pixel information of the gain map, and a pixel of the gain map is converted into a floating-point number between 0 and 1. Then, the normalized floating-point number is digitally encoded based on a selected bit depth, such as 8bit or 10bit. Segmentation and identification of the gain map may be performed before the foregoing preprocessing operations, or may be performed after the preprocessing.

In this embodiment, the gain map may further be segmented with reference to a size of an encoding unit selected by the encoder, for example, a block size of a CTU. In this way, the sizes of the first picture region and the second picture region are block sizes of one or more CTUs. For example, if JPEG encoding is used for the gain map, the segmentation size of the gain map may be determined based on a block size 8x8 on which DCT is performed in JPEG. Certainly, the gain map may also be segmented based on another size. Details are not described herein again.

In addition, in this embodiment, optionally, the determining an encoding strategy of the gain map based on the first picture region and the second picture region includes:
determining that the encoding strategy is a first strategy when a to-be-encoded picture unit belongs to the first picture region; and
determining that the encoding strategy is a second strategy when the to-be-encoded picture unit belongs to the second picture region, where
encoding quality of the first strategy is higher than encoding quality of the second strategy.

In other words, the first picture region corresponds to a first strategy with higher encoding quality, and the second picture region corresponds to a second strategy with lower encoding quality. For to-be-encoded picture unit, encoding is performed through a corresponding first strategy or second strategy based on a region to which the to-be-encoded picture unit belongs.

The encoding quality refers to whether the decoded picture is closer to an original picture before encoding. For example, higher encoding quality indicates a larger peak signal to noise ratio (PSNR) and/or a larger structural similarity (SSIM) in a picture evaluation index of the decoded picture.

In an implementation, different encoding strategies may be different encoding rates. In other words, an encoding rate of the first picture region is greater than an encoding rate of the second picture region.

In this embodiment, the to-be-encoded picture unit is used as a smallest encoding unit supported by the picture encoder. A size of a segmentation block of the gain map may be the same as a size of an encoding unit supported by the picture encoder. For example, when an HEVC-based picture encoder is adopted, the to-be-encoded picture unit and the segmentation size are the same as the block size of the CTU. The to-be-encoded picture unit in combination with the first picture region is used as input information selected by the encoding strategy.

Optionally, in this embodiment, the first strategy includes a plurality of encoding rules with different encoding quality.

The determining that the encoding strategy is a first strategy when a to-be-encoded picture unit belongs to the first picture region includes:
determining, through a brightness level or texture information of the first picture region to which the to-be-encoded picture unit belongs, an encoding rule associated with the brightness level or the texture information.

In other words, for the first picture region, a more detailed encoding quality level may be further set based on the brightness level or the texture information. For example, a higher brightness level indicates higher encoding quality; and richer texture information indicates higher encoding quality.

In an optional implementation, by presetting a second threshold and a third threshold that are greater than the first threshold, the first picture region may be distinguished, based on brightness levels, into three levels: A, B, and C, where the brightness level is A<B<C. Encoding of the highest (first level) picture quality is performed on a region whose brightness level is C; encoding of a second highest (second level) picture quality is performed on a region whose brightness level is B; and encoding of the lowest (third level) picture quality is performed on a region whose brightness level is A.

In an optional implementation, the first picture region may be determined as a region with a rich texture and a region with a flat texture through the texture information such as edge information and high-frequency information. Encoding of the highest (first level) picture quality is performed on the region with the rich texture; and encoding of the lowest (third level) picture quality is performed on the region with a flat texture.

Similarly, for the second picture region, a more detailed encoding quality level may be further set based on the brightness level or the texture information. Details are not described herein again.

Optionally, in this embodiment, the determining an encoding strategy of the gain map based on the first picture region and the second picture region includes:
determining that the encoding strategy is a third strategy when the to-be-encoded picture unit belongs to an edge portion in the first picture region that is directly adjacent to the second picture region or an edge portion in the second picture region that is directly adjacent to the first picture region, where
encoding quality of the third strategy is higher than the encoding quality of the second strategy, and lower than the encoding quality of the first strategy.

In other words, the first strategy is applicable to another portion in the first picture region except for the edge portion that is directly adjacent to the second picture region. The second strategy is applicable to another portion in the second picture region except for the edge portion that is directly adjacent to the first picture region. For the edge portion in the first picture region that is directly adjacent to the second picture region and the edge portion in the second picture region that is directly adjacent to the first picture region, a third strategy whose encoding quality is higher than that of the second strategy but lower than that of the first strategy is applicable, so that quality of a region in the first picture region that is adjacent to the second picture region smoothly transitions, thereby avoiding perceptible subjective distortion caused by relatively large deviation in quality of adjacent regions.

Optionally, in this embodiment, the encoding the gain map based on the encoding strategy, to obtain encoded information of the gain map includes:
adjusting an encoding parameter based on the encoding strategy; and
encoding the gain map based on the encoding parameter, to obtain the encoded information, where
the encoding parameter includes at least one of the following:
   a quantization parameter;
   a transform coding coefficient; or
   a rate distortion function.

In other words, in an encoding process, at least one of the quantization parameter, the transform coding coefficient, and the rate distortion function is adjusted based on a determined encoding strategy, to implement corresponding encoding quality or a corresponding encoding rate. For example, for a picture region corresponding to the first strategy, a relatively small quantization parameter may be used for encoding, to reserve more information, and lossless encoding may be performed even when the highest encoding quality is selected. For a picture region corresponding to the second strategy, a relatively large quantization parameter may be used for encoding, thereby increasing signal distortion and reducing an encoded data volume. For another example, for the picture region corresponding to the first strategy, most transform coding coefficients of an encoding block are reserved. For a picture region corresponding to the second strategy, some transform coding coefficients are discarded. For example, a high-frequency portion of transform coding coefficients may be directly set to zero or discarded, to reduce a data volume. For another example, for the picture region corresponding to the first strategy, a high bit rate is used as a target to adjust the rate distortion function. For a picture region corresponding to the second strategy, a low bit rate is used as a target to adjust the rate distortion function.

Optionally, in this embodiment, the quantization parameter includes at least one of the following:
a picture-level quantization parameter;
a slice (slice)-level quantization parameter;
a coding tree unit (CTU)-level quantization parameter;
a tile (Tile)-level quantization parameter; or
an encoding unit (CU)-level quantization parameter.

Using HEVC static picture encoding (HEIC, HEIF) as an example, an implementation of adjusting the quantization parameter to implement an encoding strategy is that the quantization parameter may be adjusted at a picture level, a slice level, a CTU level, or a CU level. In the HEVC, a CTU is a smallest encoding unit level for which different quantization parameters may be set by default. The picture-level quantization parameter is set in a picture-level parameter set, and specifies an initial value of the picture-level quantization parameter, for example, a parameter init_qp_minus26 in a picture parameter set (PPS) of the HEVC. The slice-level quantization strategy may be implemented by setting slice_qp_delta through a slice header (header), which specifies an initial quantization parameter value of encoding and decoding in a current slice, until a CU-level quantization offset value CuQpDeltaVal occurs at a CU encoding/decoding level. init_qp_minus26 plus 26 specifies an initial value of an encoding and decoding quantization parameter of each slice using a current PPS. For a non-zero slice_qp_delta, a quantization parameter of the current slice is init_qp_minus26+26+slice_qp_delta. To implement more detailed bit rate control of different regions in a picture, different quantization parameter settings or another rate-distortion bit rate control strategy may be supported by the CU. In the HEVC, a flag bit of cu_qp_delta_enabled_flag may be enabled in the PPS. cu_qp_delta_abs specifies an absolute value of a difference between a quantization parameter of a brightness signal of a current CU and a quantization parameter of a previous CU, and cu_qp_delta_sign_flag specifies a sign of a difference between the quantization parameter of the brightness signal of the current CU and the quantization parameter of the previous CU. CU-level bit rate control may be implemented by setting the CU-level quantization parameter.

Certainly, another encoder, for example, a static picture compression format based on VVC or AV1 (AVIF) or another codec, adjusts the quantization parameter at the picture level, the slice level, the CTU level, or the CU level similar to the foregoing strategy of the HEVC, to control encoding quality of the first picture region and the second picture region of the gain map. Block division is performed on the gain map based on an encoding block size allowed by the standard. The HEVC supports a maximum CTU block size of 64x64, the VVC supports a maximum CTU block size of 256x256, and the AV1 supports a maximum superblock block size of 128x128.

In this embodiment, different slices may be further defined for the distribution of the first picture region and the second picture region in the gain map. Different encoding quality is implemented through different slice-level quantization parameters, thereby implementing higher encoding quality of the first picture region than that of the second picture region. Alternatively, different CU-level quantization parameters are defined, to implement higher encoding quality of the first picture region than that of the second picture region.

For example, the HEVC supports a maximum of 64x64 CTU block division. After the first picture region and the second picture region in the gain map are determined, the gain map is divided into the to-be-encoded units based on the CTU block size. In this case, the divided to-be-encoded unit, the first picture region, and the second picture region are used as input information of an encoding strategy, and a specific encoding strategy is determined by determining regions to which the to-be-encoded unit belong. If distribution of the first picture region and the second picture region is suitable for encoding through slice, encoding quality control of the first picture region and the second picture region can be implemented by adjusting the encoding strategy at the slice level, for example, adjusting slice_qp_delta. If distribution of CTU blocks of the to-be-encoded unit belonging to the first picture region cannot be applicable to slice encoding, a corresponding encoding strategy can be implemented at a CU/CTU level, for example, a CTU-level quantization parameter is adjusted. In this case, the CTU block division, the first picture region, and the second picture region may be used as auxiliary information selected by the encoding strategy, and used as input information for determining the encoding parameters of the first picture region and the second picture region. Specifically, the second picture region does not include any highlighted information, and the CTU encoding rate of the second picture region may be determined as a low code rate. For example, the quantization parameter is set to an allowed maximum value, to make the quantized coefficient zero as much as possible, thereby reducing the code rate. For the first picture region, a relatively small quantization parameter or lossless compression may be used, to ensure high quality of a reconstructed picture in the region.

Optionally, in this embodiment, the encoding the gain map based on the encoding parameter, to obtain the encoded information includes:
performing encoding through a different quantization parameter in a different channel when the gain map is a multi-channel gain map and the encoding parameter includes a quantization parameter.

In this way, for the multi-channel gain map, different quantization strategies may be set for different channels (for example, luma brightness and cb/cr chrominance signals). In other words, different channels may be encoded through different quantization parameters. For example, different quantization parameters of a chrominance signal and a brightness signal at different encoding and decoding levels are specified in a manner such as pps_cb_qp_offset, pps_cr_qp_offset, slice_cb_qp_offset, and slice_cr_qp_offset.

Optionally, in this embodiment, before the determining a first picture region and a second picture region in a gain map, the method further includes:
downsampling the gain map.

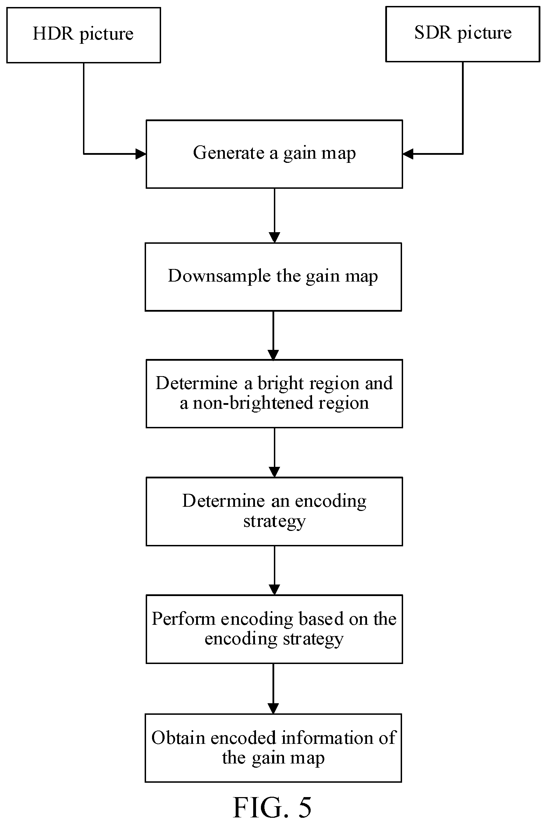

In other words, downsampling may be performed on an original gain map first, for example, 1/4 or 1/16 downsampling, the first picture region and the second picture region are determined based on a downsampled gain map, then encoding strategies of the first picture region and the second picture region are determined based on the first picture region and the second picture region, and the downsampled gain map is encoded based on the encoding strategies, as shown in FIG. 5, to further reduce the storage space.

The downsampling may use a Bilinear filter, a Lanczos filter, an edge-preserving filter, an artificial intelligence (AI)-based method, or the like.

Based on the above, according to the gain map encoding method in this embodiment of this application, picture regions having different brightnesses are encoded through an applicable encoding strategy. Compared with directly storing the gain map, a data volume is reduced, and a storage space is saved without reducing quality of the HDR or SDR picture reconstructed based on the gain map.

The gain map encoding method provided in this embodiment of this application may be performed by a gain map encoding apparatus. In this embodiment of this application, the gain map encoding apparatus provided in this embodiment of this application is described by using an example in which the gain map encoding apparatus performs the gain map encoding method.

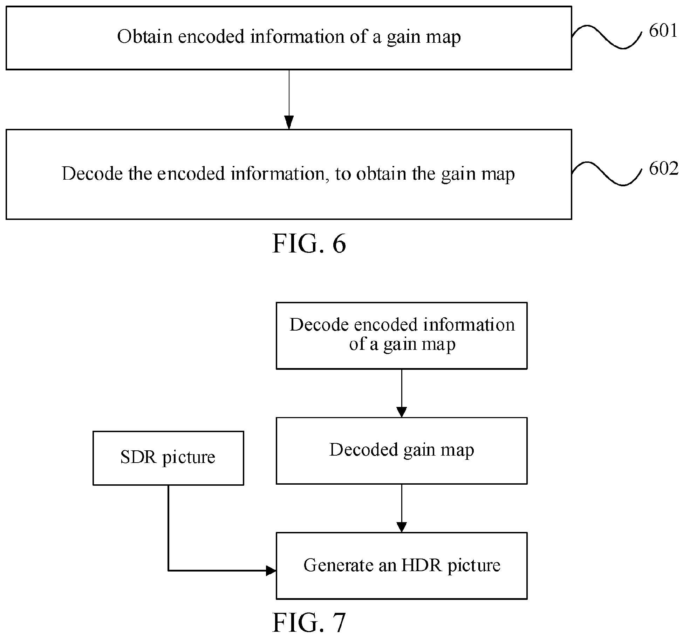

As shown in FIG. 6, a gain map decoding method in this embodiment of this application includes the following steps.

Step 601: Obtain encoded information of a gain map.

Step 602: Decode the encoded information, to obtain the gain map, where
a first picture region and a second picture region of the gain map are encoded through different encoding strategies, a brightness of a pixel point in the first picture region is greater than a first threshold, and a brightness of a pixel point in the second picture region is less than or equal to the first threshold.

In this way, after the encoded information of the gain map obtained by encoding through the foregoing embodiment method is obtained, the gain map is obtained by decoding the encoded information.

If a decoder side is also an encoder side, the obtaining encoded information of the gain map may be extracting the encoded information of the gain map from a storage space. If the decoder side is different from the encoder side, the obtaining encoded information of the gain map may be encoded information of the gain map received by the decoder side from the encoder side.

For example, as shown in FIG. 7, for encoded information of the gain map, the encoded information of the gain map is decoded to obtain the gain map. Next, an HDR picture is generated based on the decoded gain map and SDR picture. If a storage form of the HDR plus the corresponding gain map is adopted, the SDR picture is generated through the HDR and the decoded gain map.

It should be understood that because encoding through the foregoing embodiment method conforms to an encoding standard such as HEVC/VVC/AV1 or another standard, the decoder side does not need special processing, and performs decoding based on a normal code stream to reconstruct the gain map.

Optionally, the decoding the encoded information to obtain the gain map includes:
upsampling a decoded picture after the encoded information is decoded, to obtain the gain map.

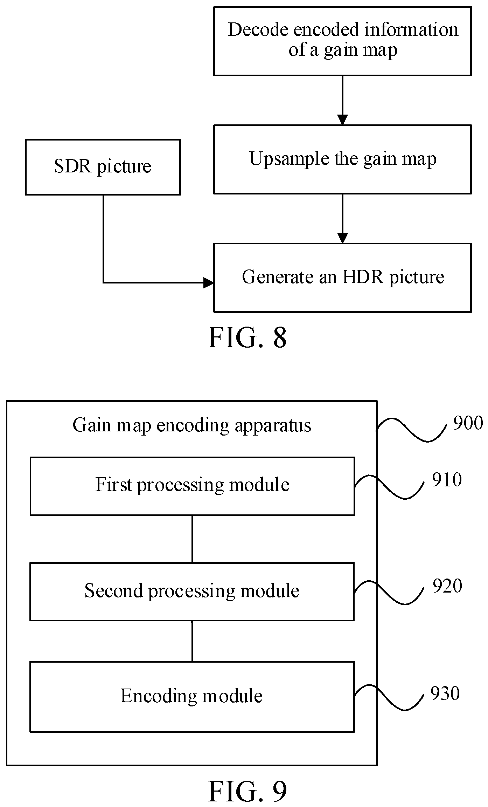

In other words, if the gain map on the encoder side is downsampled, the decoder side correspondingly needs to upsample the picture after decoding, so that the upsampled gain map is combined with the SDR/HDR picture, to generate a corresponding HDR/SDR picture, as shown in FIG. 8. The upsampling may use a Bilinear filter, a Lanczos filter, an edge-preserving filter, an AI-based method, or the like.

It should be noted that after the gain map is decoded and before the gain map is applied to the SDR/HDR to generate the HDR/SDR picture, some post-processing operations may be performed. For example, the decoded gain map is converted into a floating-point number based on an encoding bit depth, and then the floating-point number is restored to a logarithm-domain value through an inverse normalization operation. The gain map may be upsampled before the post-processing, or may be upsampled after the post-processing. Finally, the gain map is applied to the SDR/HDR picture.

It should be noted that the method is implemented in conjunction with the gain map encoding method of the foregoing embodiment. The implementation of the foregoing method embodiment is applicable to the method, and the same technical effect can also be achieved.

As shown in FIG. 9, a gain map encoding apparatus 900 in an embodiment of this application includes:
a first processing module 910, configured to determine a first picture region and a second picture region in a gain map, where a brightness of a pixel point in the first picture region is greater than a first threshold, and a brightness of a pixel point in the second picture region is less than or equal to the first threshold;
a second processing module 920, configured to determine an encoding strategy of the gain map based on the first picture region and the second picture region; and
an encoding module 930, configured to encode the gain map based on the encoding strategy, to obtain encoded information of the gain map.

Optionally, the first processing module is further configured to:
determine a segmentation size based on a target tone mapping manner, where the target tone mapping manner is a tone mapping manner used when a standard dynamic range picture is generated from a high-dynamic range picture;
segment the gain map into a plurality of regions based on the segmentation size; and
determine the first picture region and the second picture region among the plurality of regions based on the first threshold.

Optionally, the second processing module is further configured to:
determine that the encoding strategy is a first strategy when a to-be-encoded picture unit belongs to the first picture region; and
determine that the encoding strategy is a second strategy when the to-be-encoded picture unit belongs to the second picture region, where
encoding quality of the first strategy is higher than encoding quality of the second strategy.

Optionally, the first strategy includes a plurality of encoding rules with different encoding quality.

The second processing module is further configured to:
determine, through a brightness level or texture information of the first picture region to which the to-be-encoded picture unit belongs, an encoding rule associated with the brightness level or the texture information.

Optionally, the second processing module is further configured to:
determine that the encoding strategy is a third strategy when the to-be-encoded picture unit belongs to an edge portion in the first picture region that is directly adjacent to the second picture region or an edge portion in the second picture region that is directly adjacent to the first picture region, where
encoding quality of the third strategy is higher than the encoding quality of the second strategy, and lower than the encoding quality of the first strategy.

Optionally, the encoding module is further configured to:
adjust an encoding parameter based on the encoding strategy; and
encode the gain map based on the encoding parameter, to obtain the encoded information, where
the encoding parameter includes at least one of the following:
   a quantization parameter;
   a transform coding coefficient; or
   a rate distortion function.

Optionally, the quantization parameter includes at least one of the following:
a picture-level quantization parameter;
a slice-level quantization parameter;
a coding tree unit-level quantization parameter;
a tile-level quantization parameter; or
an encoding unit-level quantization parameter.

Optionally, the encoding module is further configured to:
perform encoding through a different quantization parameter in a different channel when the gain map is a multi-channel gain map and the encoding parameter includes a quantization parameter.

Optionally, the apparatus further includes:
a third processing module, configured to downsample the gain map.

After the gain map is divided into the first picture region and the second picture region through the first threshold, the apparatus can determine the encoding strategy of the gain map based on the first picture region and the second picture region, and then encode the gain map based on the determined encoding strategy, to obtain the encoded information of the gain map. In this way, for picture regions having different brightnesses, an applicable encoding strategy is adopted for encoding, which reduces the data volume and saves the storage space compared with storing the gain map.

The gain map encoding apparatus in this embodiment of this application may be an electronic device, or may be a component in the electronic device, for example, an integrated circuit or a chip. The electronic device may be a terminal, or may be another device other than the terminal. In an example, the electronic device may be a mobile phone, a tablet computer, a notebook computer, a palm computer, an on-board electronic device, a mobile Internet device (MID), an augmented reality (AR)/virtual reality (VR) device, a robot, a wearable device, an ultra-mobile personal computer (UMPC), a netbook, a personal digital assistant (PDA), or the like, or may be a server, a network attached storage (NAS), a personal computer (PC), a television (TV), a teller machine, an automated machine, or the like, which is not specifically defined in this embodiment of this application.

The gain map encoding apparatus in this embodiment of this application may be an apparatus having an operating system. The operating system may be Android (Android), iOS, or another possible operating system, which is not specifically defined in this embodiment of this application.

The gain map encoding apparatus provided in this embodiment of this application can implement all processes implemented in the method embodiments of FIG. 3 to FIG. 5. To avoid repetition, details are not described herein again.

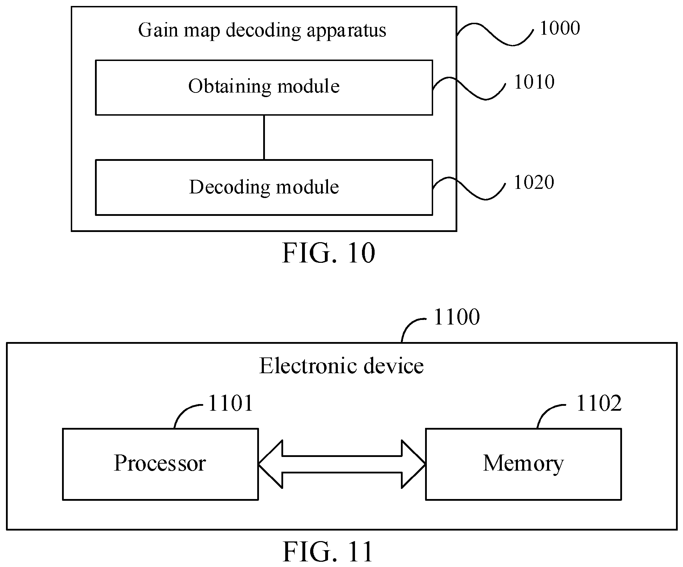

As shown in FIG. 10, an embodiment of this application further provides a gain map decoding apparatus, including:
an obtaining module 1010, configured to obtain encoded information of a gain map; and
a decoding module 1020, configured to decode the encoded information, to obtain the gain map, where
a first picture region and a second picture region of the gain map are encoded through different encoding strategies, a brightness of a pixel point in the first picture region is greater than a first threshold, and a brightness of a pixel point in the second picture region is less than or equal to the first threshold.

Optionally, the decoding module is further configured to:
upsample a decoded picture after the encoded information is decoded, to obtain the gain map.

After the encoded information of the gain map obtained by encoding through the foregoing embodiment method is obtained, the apparatus obtains the gain map by decoding the encoded information.

Optionally, as shown in FIG. 11, an embodiment of this application further provides an electronic device 1100, including a processor 1101 and a memory 1102. The memory 1102 stores a program or an instruction executable in the processor 1101. The program or the instruction, when executed by the processor 1101, implement the steps of the embodiment of the foregoing gain map encoding method or the foregoing gain map decoding method, and can achieve the same technical effects. To avoid repetition, details are not described herein again.

It should be noted that the electronic device in this embodiment of this application includes both the mobile electronic device and the non-mobile electronic device described above.

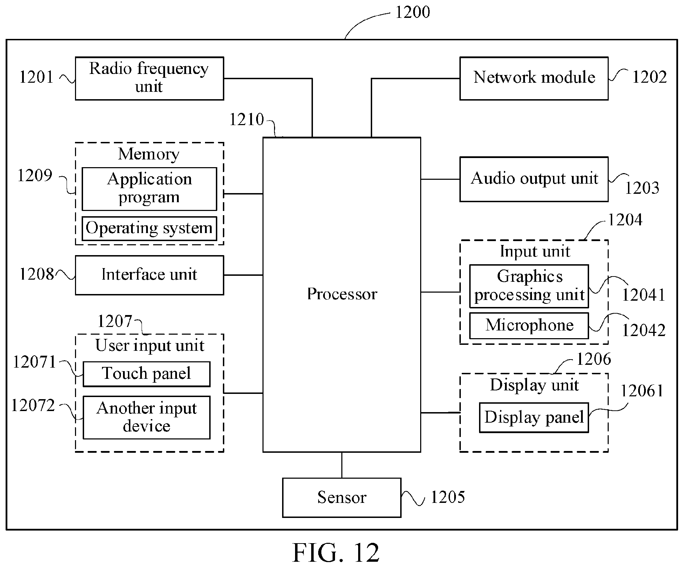

FIG. 12 is a schematic diagram of a hardware structure of an electronic device for implementing an embodiment of this application.

The electronic device 1200 includes, but is not limited to, components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that the electronic device 1200 may further include a power supply (such as a battery) that supplies power to the components. The power supply may be logically connected to the processor 1210 through a power management system, thereby implementing functions such as management of charging, discharging, and power consumption through the power management system. The electronic device structure shown in FIG. 12 constitutes no limitation on an electronic device, and the electronic device may include more or fewer components than those shown in the figure, or some merged components, or different component arrangements. Details are not described herein again.

The processor 1210 is configured to: determine a first picture region and a second picture region in a gain map, where a brightness of a pixel point in the first picture region is greater than a first threshold, and a brightness of a pixel point in the second picture region is less than or equal to the first threshold;
determine an encoding strategy of the gain map based on the first picture region and the second picture region; and
encode the gain map based on the encoding strategy, to obtain encoded information of the gain map.

After the gain map is divided into the first picture region and the second picture region through the first threshold, the electronic device can determine the encoding strategy of the gain map based on the first picture region and the second picture region, and then encode the gain map based on the determined encoding strategy, to obtain the encoded information of the gain map. In this way, for picture regions having different brightnesses, an applicable encoding strategy is adopted for encoding, which reduces the data volume and saves the storage space compared with storing the gain map.

Optionally, the processor 1210 is further configured to: determine a segmentation size based on a target tone mapping manner, where the target tone mapping manner is a tone mapping manner used when a standard dynamic range picture is generated from a high-dynamic range picture;
segment the gain map into a plurality of regions based on the segmentation size; and
determine the first picture region and the second picture region among the plurality of regions based on the first threshold.

Optionally, the processor 1210 is further configured to:
determine that the encoding strategy is a first strategy when a to-be-encoded picture unit belongs to the first picture region; and
determine that the encoding strategy is a second strategy when the to-be-encoded picture unit belongs to the second picture region, where
encoding quality of the first strategy is higher than encoding quality of the second strategy.

Optionally, the first strategy includes a plurality of encoding rules with different encoding quality.

The processor 1210 is further configured to:
determine, through a brightness level or texture information of the first picture region to which the to-be-encoded picture unit belongs, an encoding rule associated with the brightness level or the texture information.

Optionally, the processor 1210 is further configured to:
determine that the encoding strategy is a third strategy when the to-be-encoded picture unit belongs to an edge portion in the first picture region that is directly adjacent to the second picture region or an edge portion in the second picture region that is directly adjacent to the first picture region, where
encoding quality of the third strategy is higher than the encoding quality of the second strategy, and lower than the encoding quality of the first strategy.

Optionally, the processor 1210 is further configured to:
adjust an encoding parameter based on the encoding strategy; and
encode the gain map based on the encoding parameter, to obtain the encoded information, where
the encoding parameter includes at least one of the following:
   a quantization parameter;
   a transform coding coefficient; or
   a rate distortion function.

Optionally, the quantization parameter includes at least one of the following:
a picture-level quantization parameter;
a slice-level quantization parameter;
a coding tree unit-level quantization parameter;
a tile-level quantization parameter; or
an encoding unit-level quantization parameter.

Optionally, the processor 1210 is further configured to:
perform encoding through a different quantization parameter in a different channel when the gain map is a multi-channel gain map and the encoding parameter includes a quantization parameter.

Optionally, the processor 1210 is further configured to:
downsample the gain map.

It should be noted that in this embodiment of this application, the input unit 1204 may include a graphics processing unit (GPU) 12041 and a microphone 12042. The graphics processing unit 12041 processes picture data of a static picture or a video obtained by a picture capture apparatus (for example, a camera) in a video capture mode or a picture capture mode. The display unit 1206 may include a display panel 12061. The display panel 12061 may be configured in a form such as a liquid crystal display or an organic light-emitting diode. The user input unit 1207 includes at least one of a touch panel 12071 or another input device 12072. The touch panel 12071 is also referred to as a touchscreen. The touch panel 12071 may include two parts: a touch detection apparatus and a touch controller. The another input device 12072 may include but is not limited to a physical keyboard, a function button (for example, a volume control button or a power button), a trackball, a mouse, and a joystick. Details are not described herein again.

The memory 1209 may be configured to store a software program and various data. The memory 1209 may mainly include a first storage area for storing a program or instructions and a second storage area for storing data. The first storage area may store an operating system, an application program or an instruction required for at least one function (for example, a sound playback function and a picture playback function), and the like. In addition, the memory 1209 may include a volatile memory or a non-volatile memory, or the memory 1209 may include both the volatile memory and the non-volatile memory. The non-transitory memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synchronous link dynamic random access memory (SLDRAM), and a direct rambus random access memory (DRRAM). The memory 1209 in this embodiment of this application includes, but is not limited to, these memories and any other suitable types of memories.

The processor 1210 may include one or more processing units. Optionally, an application processor and a modem processor are integrated into the processor 1210. The application processor mainly processes operations related to an operating system, a user interface, an application program, and the like. The modem processor mainly processes a wireless communication signal, which, for example, may be a baseband processor. It may be understood that the foregoing modem processor may alternatively not be integrated into the processor 1210.

Certainly, the electronic device shown in FIG. 12 can also apply the gain map decoding method shown in the foregoing embodiment. Details are not described herein again.

An embodiment of this application further provides a readable storage medium. The readable storage medium stores a program or an instruction. The program or the instruction, when executed by a processor, implements the processes of the embodiment of the foregoing gain map encoding method or the foregoing gain map decoding method, and can achieve the same technical effects. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or an instruction, to implement the processes of the embodiment of the foregoing gain map encoding method or the foregoing gain map decoding method, and can achieve the same technical effect. To avoid repetition, details are not described herein again.

It should be understood that the chip in this embodiment of this application may also be referred to as a system level chip, a system chip, a chip system, a system on chip, or the like.

An embodiment of this application provides a computer program product, stored in a storage medium. The program product is stored in a storage medium. The program product is executed by at least one processor to implement the processes of the embodiment of the foregoing gain map encoding method or the foregoing gain map decoding method, and can achieve the same technical effect. To avoid repetition, details are not described herein again.

The processor in this embodiment of this application may include a general-purpose processor, a dedicated processor, or the like, for example, a central processing unit (CPU), a microprocessor, a digital signal processor (DSP), an artificial intelligence (AI) processor, a graphics processing unit (GPU), an application specific integrated circuit (ASIC), a network processor (NP), a field programmable gate array (FPGA) or another programmable logic device, a discrete gate or a transistor logic device, a discrete hardware component, or the like.

It should be noted that in this specification, terms "comprise", "include" or any other variants herein are intended to encompass non-exclusive inclusion, so that a process, a method, an article, or an apparatus including a series of elements not only include those elements, but also includes another element not listed explicitly or includes intrinsic elements for the process, the method, the article, or the apparatus. Without any further limitation, an element defined by a phrase "include one ..." does not exclude existence of an additional same element in the process, the method, the article, or the apparatus that includes the element. In addition, it should be noted that the scope of the method and the apparatus in implementations of this application is not limited to execution of functions in the order shown or discussed, and may further include execution of functions in a substantially simultaneous manner or in a reverse order based on the functions involved. For example, the described method may be performed in a different order from the described order, and various steps may also be added, omitted, or combined. In addition, features described with reference to some examples may be combined in another example.

According to the descriptions of the foregoing implementations, a person skilled in the art may clearly learn that the method in the foregoing embodiments may be implemented by software with a necessary universal hardware platform, or may be implemented by hardware. However, in many cases, the software with a necessary universal hardware platform is a preferred implementation. Based on such an understanding, the technical solutions of this application, in essence, or a part contributing to the prior art may be embodied in a form of a computer software product. The computer software product is stored in a storage medium (such as a ROM/RAM, a magnetic disk, or an optical disk), including a plurality of instructions for causing a terminal (which may be a mobile phone, a computer, a server, a network device, or the like) to perform the method in embodiments of this application.

Although embodiments of this application are described above with reference to the accompanying drawings, this application is not limited to the specific implementations described above. The foregoing specific implementations are illustrative but not restrictive. With the enlightenment of this application, a person of ordinary skill in the art may make many forms without departing from the concept of this application and the protection scope of the claims. These forms fall within the protection of this application.

## Claims

1. A gain map encoding method, comprising:
determining a first picture region and a second picture region in a gain map, wherein a brightness of a pixel point in the first picture region is greater than a first threshold, and a brightness of a pixel point in the second picture region is less than or equal to the first threshold;
determining an encoding strategy of the gain map based on the first picture region and the second picture region; and
encoding the gain map based on the encoding strategy, to obtain encoded information of the gain map.

2. The method according to claim 1, wherein the determining a first picture region and a second picture region in a gain map comprises:
determining a segmentation size based on a target tone mapping manner, wherein the target tone mapping manner is a tone mapping manner used when a standard dynamic range picture is generated from a high-dynamic range picture;
segmenting the gain map into a plurality of regions based on the segmentation size; and
determining the first picture region and the second picture region among the plurality of regions based on the first threshold.

3. The method according to claim 1, wherein the determining an encoding strategy of the gain map based on the first picture region and the second picture region comprises:
determining that the encoding strategy is a first strategy when a to-be-encoded picture unit belongs to the first picture region; and
determining that the encoding strategy is a second strategy when the to-be-encoded picture unit belongs to the second picture region, wherein
encoding quality of the first strategy is higher than encoding quality of the second strategy.

4. The method according to claim 3, wherein the first strategy comprises a plurality of encoding rules with different encoding quality; and
the determining that the encoding strategy is a first strategy when a to-be-encoded picture unit belongs to the first picture region comprises:
determining, through a brightness level or texture information of the first picture region to which the to-be-encoded picture unit belongs, an encoding rule associated with the brightness level or the texture information.

5. The method according to claim 3, wherein the determining an encoding strategy of the gain map based on the first picture region and the second picture region comprises:
determining that the encoding strategy is a third strategy when the to-be-encoded picture unit belongs to an edge portion in the first picture region that is directly adjacent to the second picture region or an edge portion in the second picture region that is directly adjacent to the first picture region, wherein
encoding quality of the third strategy is higher than the encoding quality of the second strategy, and lower than the encoding quality of the first strategy.

6. The method according to claim 1, wherein the encoding the gain map based on the encoding strategy, to obtain encoded information of the gain map comprises:
adjusting an encoding parameter based on the encoding strategy; and
encoding the gain map based on the encoding parameter, to obtain the encoded information, wherein
the encoding parameter comprises at least one of the following:
a quantization parameter;
a transform coding coefficient; or
a rate distortion function.

7. The method according to claim 6, wherein the quantization parameter comprises at least one of the following:
a picture-level quantization parameter;
a slice-level quantization parameter;
a coding tree unit-level quantization parameter;
a tile-level quantization parameter; or
an encoding unit-level quantization parameter.

8. The method according to claim 6, wherein the encoding the gain map based on the encoding parameter, to obtain the encoded information comprises:
performing encoding through a different quantization parameter in a different channel when the gain map is a multi-channel gain map and the encoding parameter comprises a quantization parameter.

9. The method according to claim 1, wherein before the determining a first picture region and a second picture region in a gain map, the method further comprises:
downsampling the gain map.

10. A gain map decoding method, comprising:
obtaining encoded information of a gain map; and
decoding the encoded information to obtain the gain map, wherein
a first picture region and a second picture region of the gain map are encoded through different encoding strategies, a brightness of a pixel point in the first picture region is greater than a first threshold, and a brightness of a pixel point in the second picture region is less than or equal to the first threshold.

11. The method according to claim 10, wherein the decoding the encoded information to obtain the gain map comprises:
upsampling a decoded picture after the encoded information is decoded, to obtain the gain map.

12. A gain map encoding apparatus, comprising:
a first processing module, configured to determine a first picture region and a second picture region in a gain map, wherein a brightness of a pixel point in the first picture region is greater than a first threshold, and a brightness of a pixel point in the second picture region is less than or equal to the first threshold;
a second processing module, configured to determine an encoding strategy of the gain map based on the first picture region and the second picture region; and
an encoding module, configured to encode the gain map based on the encoding strategy, to obtain encoded information of the gain map.

13. The apparatus according to claim 12, wherein the determining a first picture region and a second picture region in a gain map comprises:
determining a segmentation size based on a target tone mapping manner, wherein the target tone mapping manner is a tone mapping manner used when a standard dynamic range picture is generated from a high-dynamic range picture;
segmenting the gain map into a plurality of regions based on the segmentation size; and
determining the first picture region and the second picture region among the plurality of regions based on the first threshold.

14. The apparatus according to claim 12, wherein the second processing module is further configured to:
determine that the encoding strategy is a first strategy when a to-be-encoded picture unit belongs to the first picture region; and
determine that the encoding strategy is a second strategy when the to-be-encoded picture unit belongs to the second picture region, wherein
encoding quality of the first strategy is higher than encoding quality of the second strategy.

15. The apparatus according to claim 14, wherein the first strategy comprises a plurality of encoding rules with different encoding quality; and
the second processing module is further configured to:
determine, through a brightness level or texture information of the first picture region to which the to-be-encoded picture unit belongs, an encoding rule associated with the brightness level or the texture information.

16. The apparatus according to claim 14, wherein the second processing module is further configured to:
determine that the encoding strategy is a third strategy when the to-be-encoded picture unit belongs to an edge portion in the first picture region that is directly adjacent to the second picture region or an edge portion in the second picture region that is directly adjacent to the first picture region, wherein
encoding quality of the third strategy is higher than the encoding quality of the second strategy, and lower than the encoding quality of the first strategy.

17. The apparatus according to claim 12, wherein the encoding module is configured to:
adjust an encoding parameter based on the encoding strategy; and
encode the gain map based on the encoding parameter, to obtain the encoded information, wherein
the encoding parameter comprises at least one of the following:
a quantization parameter;
a transform coding coefficient; or
a rate distortion function.

18. The apparatus according to claim 17, wherein the quantization parameter comprises at least one of the following:
a picture-level quantization parameter;
a slice-level quantization parameter;
a coding tree unit-level quantization parameter;
a tile-level quantization parameter; or
an encoding unit-level quantization parameter.

19. The apparatus according to claim 17, wherein the encoding module is further configured to:
perform encoding through a different quantization parameter in a different channel when the gain map is a multi-channel gain map and the encoding parameter comprises a quantization parameter.

20. The apparatus according to claim 12, further comprising:
a third processing module, configured to downsample the gain map.

21. A gain map decoding apparatus, comprising:
an obtaining module, configured to obtain encoded information of a gain map; and
a decoding module, configured to decode the encoded information, to obtain the gain map, wherein
a first picture region and a second picture region of the gain map are encoded through different encoding strategies, a brightness of a pixel point in the first picture region is greater than a first threshold, and a brightness of a pixel point in the second picture region is less than or equal to the first threshold.

22. The apparatus according to claim 21, wherein the decoding module is configured to:
upsample a decoded picture after the encoded information is decoded, to obtain the gain map.

23. An electronic device, comprising a processor and a memory, wherein the memory stores a program or an instruction executable in the processor, the program or the instruction, when executed by the processor, implementing the steps of the gain map encoding method according to any one of claims 1 to 9 or the gain map decoding method according to any one of claims 10 to 11.

24. A readable storage medium, storing a program or an instruction, the program or the instruction, when executed by a processor, implementing the steps of the gain map encoding method according to any one of claims 1 to 9 or the gain map decoding method according to any one of claims 10 to 11.

25. A chip, comprising a processor and a communication interface, wherein the communication interface is coupled to the processor, and the processor is configured to run a program or an instruction, to implement the steps of the gain map encoding method according to any one of claims 1 to 9 or the gain map decoding method according to any one of claims 10 to 11.

26. A computer program product, stored in a storage medium, wherein the computer program product is executed by at least one processor to implement the steps of the gain map encoding method according to any one of claims 1 to 9 or the gain map decoding method according to any one of claims 10 to 11.
